# EUROPEAN PATENT APPLICATION

(11) **EP 1 484 904 A1**
(43) Date of publication of application: **08.12.2004**
(21) Application number: 04013291.2
(22) Date of filing: 04.06.2004
(51) Int. Cl.: H04N 1/23, G03G 15/00

(54) **Image forming apparatus**

(30) Priority: 04.06.2003 JP 2003159028
(71) Applicant: Oki Data Corporation, Tokyo 108-8551 (JP)
(72) Inventor: Kohara, Ryuichi, Tokyo 108-8551 (JP)
(74) Representative: Betten & Resch

(57) **Abstract**

An original reading section (101, 201, 301, 401, 501, 601) irradiates an original document with light and receives light reflected back from the original document. The said original-reading section obtains first information from the light reflected back from the original document, the first information being information on optical reflection from a non-image area of the original. A plurality of medium trays (107-108, 207-208, 307-308, 407-408, 507-508, 607-608) hold different types of recording media therein. An information storing section (104, 204, 304, 404, 504, 604) stores second information on optical reflection from each of the different types of recording media. A comparing section (105, 205, 305, 405, 505, 605) that compares the first information with the second information to output a comparison result. A medium selecting section (106, 206, 306, 406, 506, 606) selects a medium from the different types of recording media, the medium being selected according to the comparison result. An image forming section (109, 209, 309, 409, 509, 609) prints an image of the original document on the recording medium.

## Description

### BACKGROUND OF THE INVENTION

### FIELD OF THE INVENTION

The present invention relates to an electrophotographic image forming apparatus.

### DESCRIPTION OF THE RELATED ART

Among the image forming apparatus on the market is one in which prior to a copying operation, an original-reading means detects the size of an original and a recording medium having a size corresponding to the original is selected. One such conventional image forming apparatus is disclosed in Japanese Patent Laid Open No. 2000-32207, in which the number of colors in image data is acquired and compared with a predetermined number of colors to select the type of print medium to be printed on.

Thus, the selected medium has not necessarily a lightness level close to that of the original. If the recording medium has a lightness level substantially different from the original, the resulting print quality is poor.

### SUMMARY OF THE INVENTION

An object of the invention is to provide an image forming apparatus in which an image of an original document can be printed on a recording medium having a lightness level close to that of the original document.

An image forming apparatus includes an original reading section (101, 201, 301, 401, 501, 601) , a plurality of medium trays (107-108, 207-208, 307-308, 407-408, 507-508, 607-608), a first information obtaining section, an information storing section (104, 204, 304, 404, 504, 604) , a comparing section (105, 205, 305, 405, 505, 605), a medium selecting section (106, 206, 306, 406, 506, 606), and an image forming section (109, 209, 309, 409, 509, 609) . The original reading section irradiates an original document with light and receives light reflected back from the original document. The original-reading section obtains first information from the light reflected back from the original document, the first information being information on optical reflection from a non-image area of the original. A plurality of medium trays hold different types of recording media therein. An information storing section stores second information on optical reflection from each of the different types of recording media. A comparing section compares the first information with the second information to output a comparison result. A medium selecting section selects a medium from the different types of recording media, the medium being selected according to the comparison result. An image forming section forms an image on the recording medium, the image being the information on optical reflection from an image area of the original document.

The second information represents a lightness level of each of the different types of recording media.

The second information represents a gloss level of each of the different types of recording media.

The second information represents a color of each of the different types of recording media.

The original reading section irradiates a desired recording medium with light and receives light reflected back from the desired recording medium. The original reading section obtains the second information on optical reflection from the desired recording medium and stores the second information into the image storing section.

Each of the plurality of medium trays (207, 208) includes an information obtaining section (207a, 208a) that obtains the second information, the second information being stored into the image storing section (204).

The image forming apparatus further includes an information-obtaining section (309a) that obtains the second information, said information-obtaining section (309a) being disposed in a path in which the recording medium is transported.

The image forming apparatus may further include an inputting section (110, 210, 310, 410, 510, 610) through which an operator inputs the second information.

The image forming apparatus may further include a table (TABLE 1) that lists types of recording media and the second information corresponding to the types of recording media. An operator inputs a desired type of recording medium through an inputting section (510). A selecting section (511) selects from the table (TABLE 1) the second information on a recording medium of the desired type. The second information on the recording medium of the desired type selected by the selecting section (511) is stored into the information storing section (504).

The image forming apparatus may further include a registering section (613) that registers to the table (TABLE 1) the types of recording media and the second information corresponding to the types of recording media. The original reading section (601) irradiates a recording medium of a desired type with light and receives light reflected back from the desired recording medium, so that said original-reading section (601) obtains the second information on optical reflection from a recording medium of the desired type. The registering section (613) registers into the table (TABLE 1) a type of the desired recording medium and the second information.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 illustrates the general configuration of an image forming apparatus according to a first embodiment;
Fig. 2 is a flowchart that illustrates the operation of the first embodiment;
Fig. 3 is a flowchart illustrating an image-forming operation (i.e., a copying operation);
Fig. 4 illustrates the configuration of an image forming apparatus according to a second embodiment;
Fig. 5 is a flowchart illustrating a copying operation of an image forming apparatus according to the second embodiment;
Fig. 6 illustrates the general configuration of an image forming section according to a third embodiment;
Fig. 7 is a flowchart illustrating the copying operation of the image forming section according to the third embodiment;
Fig. 8 illustrates the general configuration of an image forming section according to a fourth embodiment;
Fig. 9 is a flowchart that illustrates the lightness reading mode;
Fig. 10 illustrates an image forming apparatus according to a fifth embodiment;
Fig. 11 illustrates an example of a table that lists media and their lightness level;
Fig. 12 is a flowchart that illustrates a lightness reading mode;
Fig. 13 illustrates the general configuration of an image forming apparatus according to a sixth embodiment; and
Fig. 14 is a flowchart illustrating the operation for registering the lightness of a recording medium to a medium lightness level table.

### DESCRIPTION OF THE INVENTION

Preferred embodiments of an electrophotographic image forming apparatus according to the invention will be described.

### First Embodiment

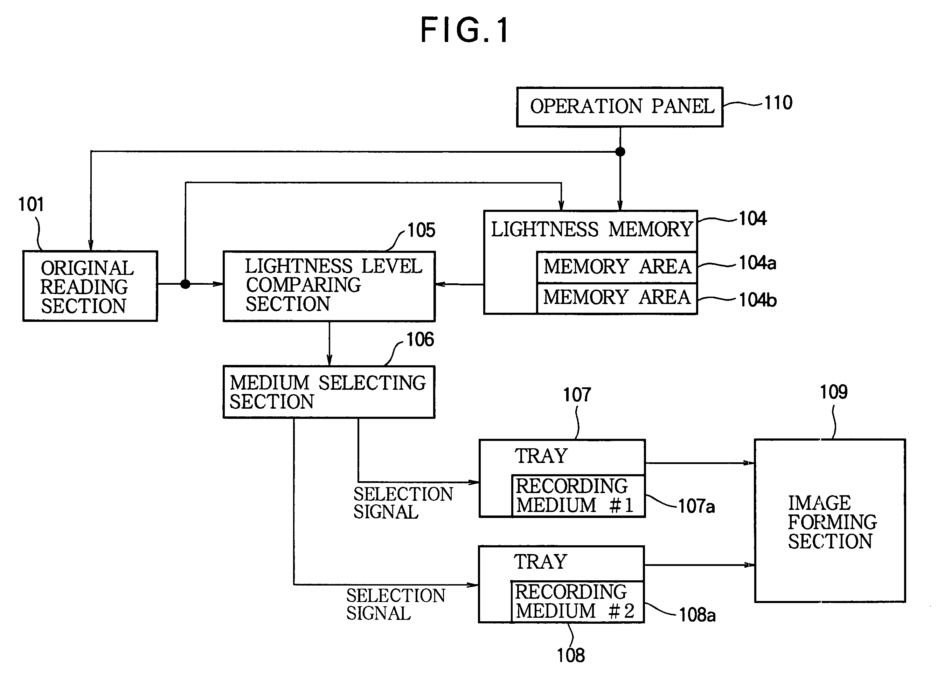

Fig. 1 illustrates the general configuration of an image forming apparatus according to a first embodiment.

Referring to Fig. 1, an original reading section 101 irradiates an original document with light and receives the light reflected back from the original document. The received light includes information (i.e., image) on optical reflection from an image area of the original document and information (i.e., lightness level) on optical reflection from a non-image area of the original document. The lightness level is outputted to a lightness comparing section 105 while the image is outputted to an image forming section 109.

Likewise, the original reading section 101 also irradiates a recording medium with light and receives the light reflected back from the recording medium, thereby determining the lightness level of the recording medium.

The original reading section 101 may include a gloss sensor and a color sensor so as to detect the gloss and colors of the original document. A lightness memory 104 includes a memory area 104a and a memory area 104b that hold the lightness level of the original document detected by the original reading section 101. The lightness level of an original document is the lightness level of the medium on which an original image is printed. The top and bottom margins and left side and right side margins of a medium are usually not printed. The lightness level of the medium of an original document is determined by detecting the lightness level in a non-image area of the medium, for example, approximately 5 mm from the leading edge, trailing edge, left edge, and right edge of the original document. If the lightness levels are detected from more than one area, an average of the lightness levels in these areas is used as a lightness level of the medium of the original document.

Alternatively, an average of the lightness levels of an image may be used as the lightness level of the original document. For an original document such as a borderless photograph, the original document has non-printed margins, in which case the lightness levels are different depending on peripheral portions on the original document. If it is detected that the lightness levels are different at a plurality of peripheral portions on an original document, a recording medium is fed from a predetermined tray to an image forming section.

A lightness comparing section 105 is connected to the original reading section 101 and the lightness memory 104, and compares the lightness level read by the original reading section 101 with predetermined lightness levels stored in the memory areas 104a and 104b of the lightness memory 104. The memory area 104a holds the lightness level of a recording medium 1 held in a tray 107, while the memory area 104b holds the lightness level of a recording medium 2 held in a tray 108. The recording medium 1 and recording medium 2 have different lightness levels.

A medium selecting section 106 is connected to the lightness comparing section 105 and provides a selection signal to the tray 107 or to the tray 108 depending on the comparison result output from the lightness comparing section 105.

The tray 107 holds the recording medium 1. Upon receiving the selection signal from the medium selecting section 106, the tray 107 feeds the recording medium to the image forming section 109. Upon receiving the selection signal from the medium selecting section 106, the tray 108 feeds the recording medium 2 to the image forming section 109.

The image forming section 109 forms an image either on the recording medium 1 fed from the tray 107 or on the recording medium 2 fed from the tray 108. An operator inputs a command to perform a copying operation to the original reading section 101 through an operation panel 110.

When the operator inputs a command to store the lightness level of the print medium through the operation panel 110, the operation panel 110 displays a message that prompts the operator to select a tray, and a message that requests to read the lightness level of the recording medium. The lightness memory 104 holds the lightness level of the recording medium that is read by the original reading section 101.

The image forming apparatus according to the first embodiment operates in two modes: a lightness reading mode in which the lightness level of a recording medium is stored and an image forming mode in which an original document is read to print a corresponding image on a recording medium. When a recording medium is replenished into a corresponding tray, the image forming apparatus enters the lightness reading mode.

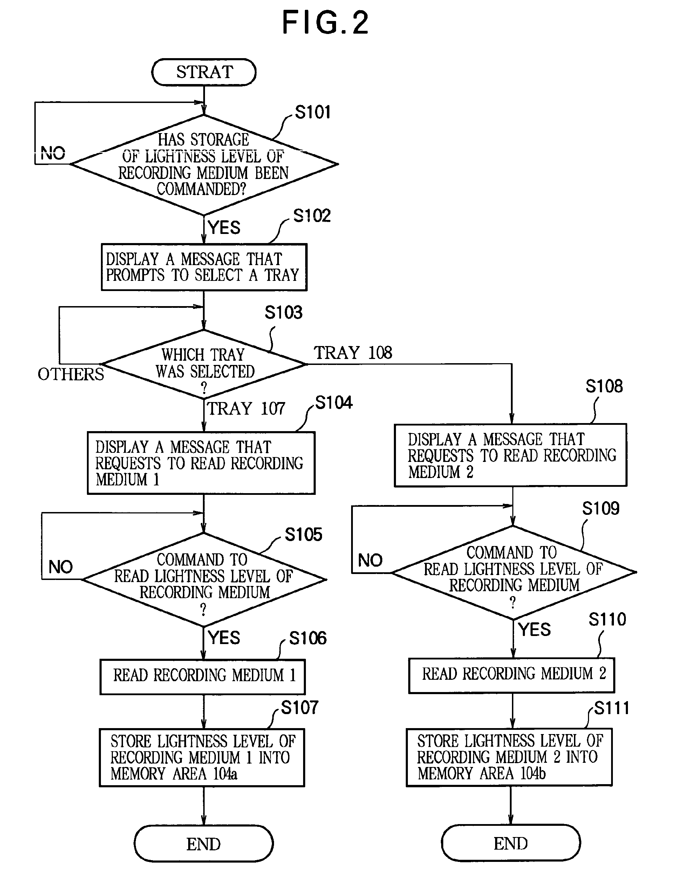

Fig. 2 is a flowchart that illustrates the operation of the first embodiment.

The operation for storing the lightness level of the recording medium held in the tray 107 will now be described with reference to Fig. 2.

Through the operation panel 110, the operator commands the storage of the lightness level of the recording medium (S101). The message that prompts the user to select a tray is displayed on the operation panel 110 (S102). When the operator operates the operation panel 110 to select the tray 107 (S103), the message that requests to read the lightness level of the recording medium 1 is displayed on the operation panel 110 (S104). When the operator places the recording medium 1 on the glass platen of the original reading section 101 and then inputs a command to read the lightness level of the recording medium 1 (S105), the original reading section 101 reads the lightness level of the recording medium 1 (S106). The thus read lightness level is stored into a memory area 104a in the lightness memory 104 (S107). When the operator selects the tray 108 from the operation panel 110 (S103), the message that requests to read the lightness level of the recording medium 2 is displayed on the operation panel 110 (S108). When the operator places the recording medium 2 on the glass platen of the original reading section 101 and then inputs a command to read the lightness of the recording medium 2, the original reading section 101 reads the lightness level of the recording medium 2 (S110). The thus read lightness level is stored into a memory area 104b in the lightness memory 104 (S111).

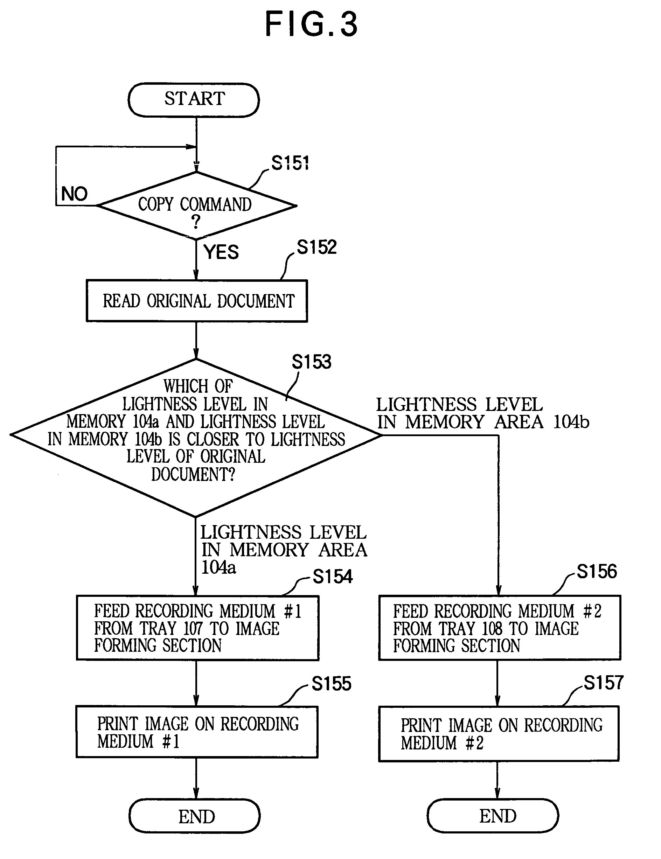

Fig. 3 is a flowchart illustrating an image forming operation (i.e., a copying operation).

The copying operation will be described with reference to Fig. 3.

When the operator places an original document on the glass platen of the image forming apparatus and inputs a command to perform a copy operation (S151), the original reading section 101 reads optically the image information from the original document (S152). The lightness comparing section 105 compares the lightness level of the original document with the lightness level stored in the memory area 104a and the lightness level stored in the memory area 104b. Based on the comparison result, the lightness comparing section 105 determines which of the lightness level in the memory area 104a and the lightness level in the memory area 104b is closer to the lightness level of the original document (S153).

The comparison result of the lightness comparing section 105 is input to a medium selecting section 106. If the lightness level of the original document is closer to the content in the memory area 104a than to the content in the memory area 104b, then the lightness comparing section 105 outputs a selection signal indicative of the tray 107, and the program proceeds to step S154. If the lightness level of the original document is closer to the content in the memory area 104b than to the content in the memory area 104a, then the lightness comparing section 105 outputs a selection signal indicative of the tray 108, and the program proceeds to step S156.

Upon receiving the selection signal, the tray 107 feeds the recording medium 1 to the image forming section 109 (S154), which in turn forms the image read from the original document on the recording medium 1. Reading an image from an original document and forming the image on the recording medium may be performed concurrently or the image may be first stored in its entirety into the image forming section and then formed on the recording medium.

Upon the selection signal, the tray 108 feeds the recording medium 2 to the image forming section 109 (S156), which in turn forms the image read from the original document on the reading medium 1 (S157).

In the first embodiment, the lightness level of the medium of an original document is determined by detecting the light reflected from a particular area on the original document (e.g., a non-printed peripheral portion of the original document). Alternatively, an information processing section may be added to the system. In other words, information on optical reflection from the entire area of an original document may be obtained first and then the thus read information may be processed into an image signal and a lightness signal.

### Second Embodiment

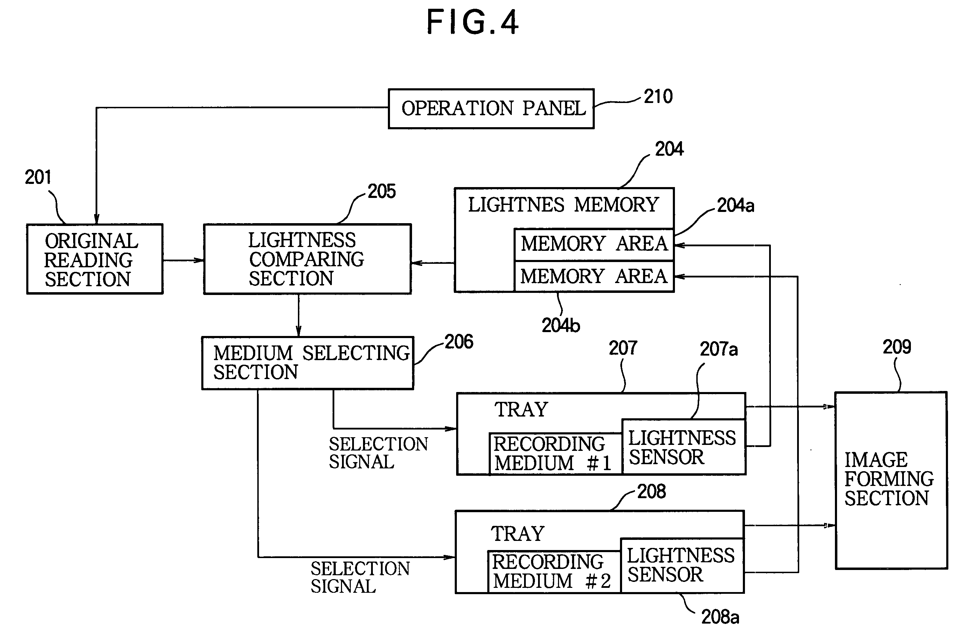

Fig. 4 illustrates the configuration of an image forming apparatus according to a second embodiment.

Referring to Fig. 4, the original reading section 201 irradiates the original document with light and receives the light reflected back from the original document. The received light includes information (i.e., image) on optical reflection from an image area of the original document and information (i.e., lightness level) on optical reflection from a non-image area of the original document. A lightness memory 204 has a memory area 201a and a memory area 204b, which are connected to a lightness sensor 207a and a lightness sensor 208a, respectively. The memory area 204a stores the lightness level of the recording medium 1 detected by the lightness sensor 207a. The memory area 204b stores the lightness level of the recording medium 2 detected by the lightness sensor 208a.

The lightness comparing section 205 is connected to the original reading section 201 and the lightness memory 204, and compares the lightness level of the original document read by the original reading section 201 with the lightness level stored in the memory area 204a and the lightness level stored in the memory area 204b. A medium selecting section 206 is connected to the lightness comparing section 205 and outputs a selection signal to a tray 207 or a tray 208 depending on the comparison result output from the lightness comparing section 205.

The tray 207 holds the recording medium 1 therein. Upon receiving the selection signal from the medium selecting section 206, the tray 207 feeds the recording medium 1 to the image forming section 209. The tray 208 holds the recording medium 2 therein. Upon receiving the selection signal from the medium selecting section 206, the tray 208 feeds the recording medium 2 to the image forming section 209. The recording medium 1 and the recording medium 2 have different lightness levels. The image forming section 209 forms an image either on the recording medium 1 supplied from the tray 207 or on the recording medium 2 supplied from the tray 208.

The lightness sensor 207a is provided in a path in which the recording medium 1 is fed from the tray 207 and detects the lightness level of the recording medium 1. The lightness sensor 208a is provided in a path in which the recording medium 1 is fed from_the tray 208 and detects the lightness level of the recording medium 2. When the operator inputs a command to perform a copying operation from the operation panel 210, the original reading section 201 reads the lightness level of the recording medium.

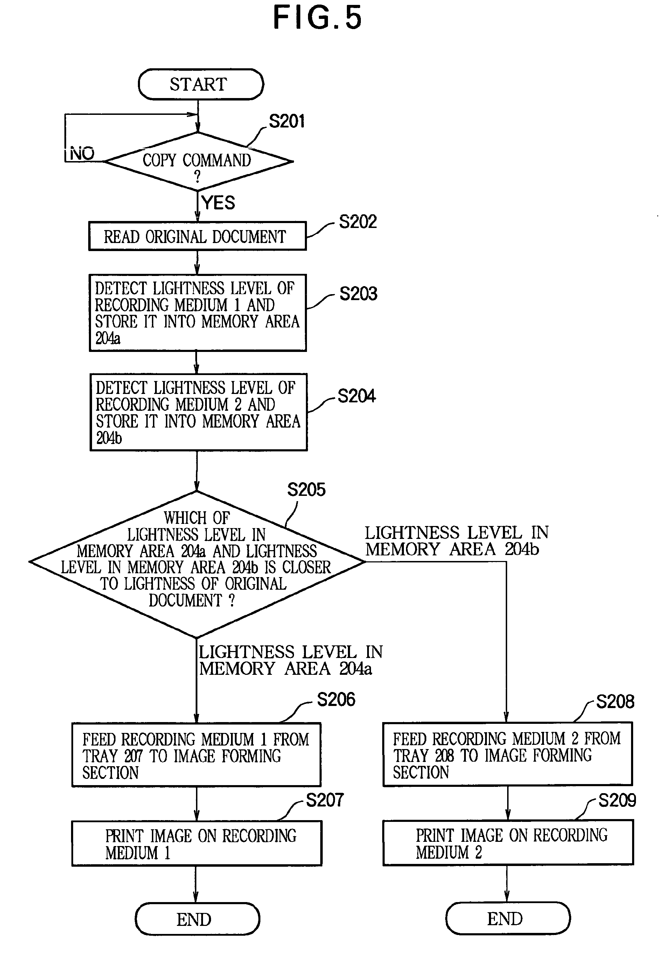

Fig. 5 is a flowchart illustrating a copying operation of the image forming apparatus according to the second embodiment. The copying operation of the image forming apparatus according to the second embodiment will be described with reference to Fig. 5.

When the operator places an original document on the glass platen and inputs a command to perform a copying operation (S201), the original reading section 201 reads the image information from the original document (S202). The lightness sensor 207a detects the lightness level of the recording medium 1. The detected lightness level of the recording medium 1 is stored into the memory area 204a in the lightness memory 204 (S203). The lightness sensor 208a detects the lightness level of the recording medium 2. The detected lightness of the recording medium 2 is stored in the memory area 204b of the lightness memory 204 (S204) . The lightness comparing section 205 compares the lightness level of the original document with the lightness level stored in the memory area 204b with and the lightness level stored in the memory area 204a to determine which of the lightness level in the memory area 204a and the lightness level in the memory area 204b is closer to the lightness level of the original document (S205). The comparison result is fed to the medium selecting section 206, which in turn outputs the selection signal to the tray 207 if the lightness level of the original document is closer to the content of the memory area 204a, or to the tray 208 if the lightness level of the original document is closer to the content of the memory area 204b. If the tray 207 receives the selection signal, then the tray 207 feeds the recording medium 1 to the image forming section 209 (S206). Then, the image forming section 209 forms the image read from the original document on the recording medium 1. If the tray 208 receives the selection signal, then the tray 208 feeds the recording medium 2 to the image forming section 209 (S208). Then, the image forming section 209 forms the image read from the original document on the recording medium 2 (S209).

### Third Embodiment

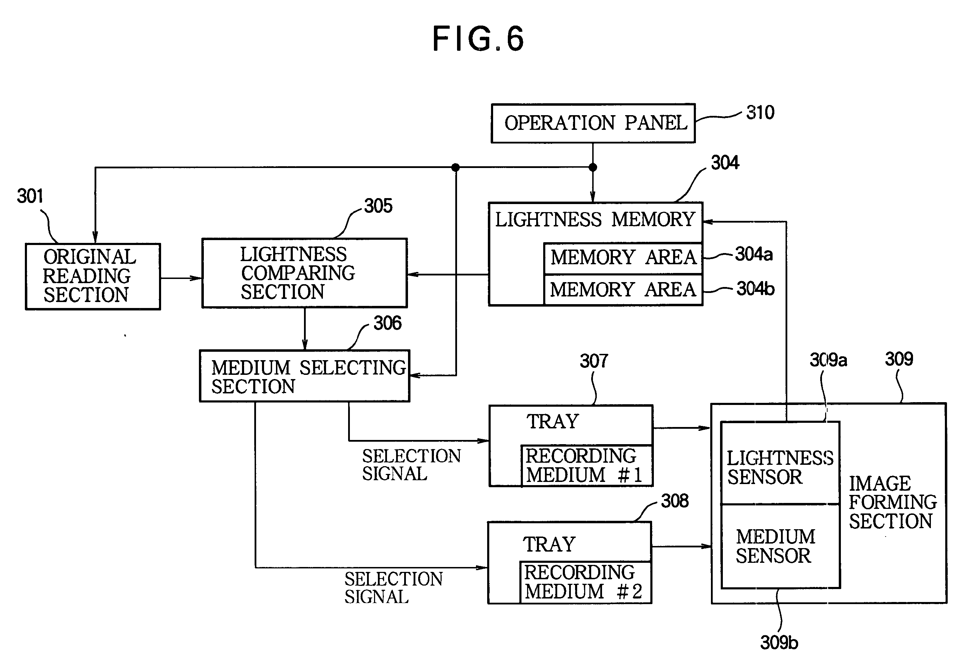

Fig. 6 illustrates the general configuration of an image forming section according to a third embodiment. A lightness memory 304 is connected to a lightness sensor 309a and stores the lightness level of the recording medium detected by the lightness sensor 309a. The lightness memory 304 includes a memory area 304a and a memory area 304b. A lightness comparing memory 305 is connected to an original reading section 301 and the lightness memory 304. The lightness comparing section 305 compares the lightness level of the original document read by the original reading section 301 with the lightness level stored in the memory area 304a and the lightness level stored in the memory area 304b. A medium selecting section 306 is connected to the lightness comparing section 305 and outputs a selection signal to a tray 307 or a tray 308 depending on the comparison result of the lightness comparing section 305.

The tray 307 holds the recording medium 1 and is connected to the medium selecting section 306. Upon receiving the selection signal form the medium selecting section 306, the tray 307 feeds the recording medium 1 to the image forming section 309. The tray 308 is connected to the medium selecting section 306. Upon receiving the selection signal from the medium selecting section 306, the tray 308 feeds the recording medium 2 to the image forming section 309. The recording medium 1 and the recording medium 2 have different lightness levels. The image forming section 309 forms the image read from the original document either on the recording medium 1 fed from the tray 307 or on the recording medium 2 fed from the tray 308.

The lightness sensor 309a is provided in the image forming section 309 and detects the lightness level of the recording medium 1 fed from the tray 307 and the lightness level of the recording medium 2 fed from the tray 308. A medium sensor 309b is provided in the image forming section 309 and detects whether the recording medium 1 is present in the tray 307 or the recording medium 2 is present in the tray 308. When the operator inputs a command to perform a copying operation from an operation panel 310, the original reading section 301 reads the original document and the medium selecting section 306 outputs a selection signal, and the lightness memory 304 stores the lightness level of a recording medium fed from a tray corresponding to the selection signal. The original reading section 301 irradiates the original document with light and receives the light reflected back from the original document. The received light includes information (i.e., image) on optical reflection from an image area of the original document and information (i.e., lightness level) on optical reflection from a non-image area of the original document.

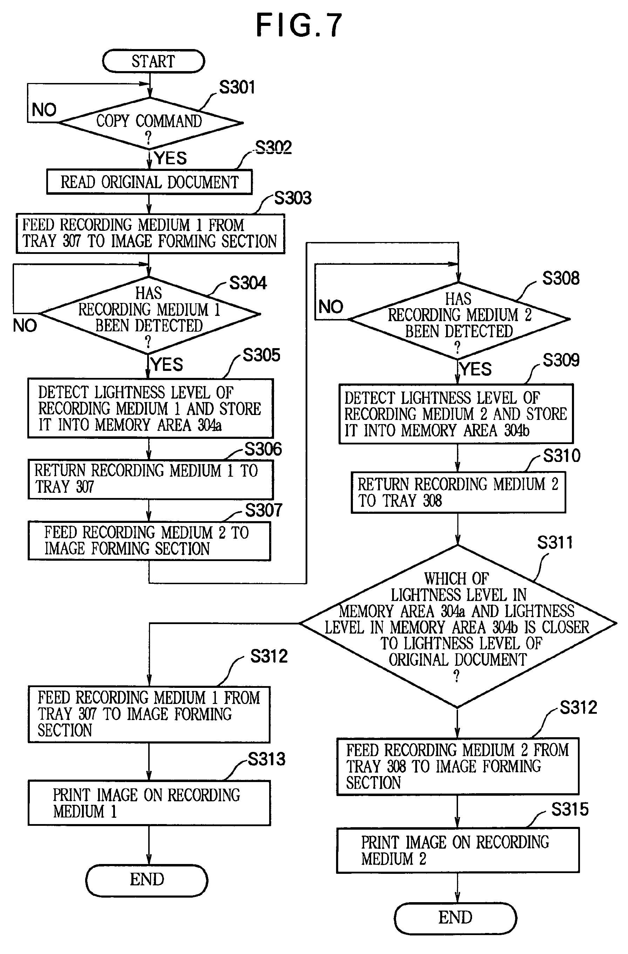

Fig. 7 is a flowchart illustrating the copying operation of the image forming section according to the third embodiment.

The copying operation of the image forming section according to the third embodiment will be described with reference to Fig. 7. When the operator places an original document on the glass platen of the original reading section 301 (S301), the original reading section 301 reads the original document (S302).

The medium selecting section 306 outputs a selection signal to the tray 307, which in turn feeds the recording medium 1 to the image forming section 309 (S303). The image forming section 309 checks the output of the medium sensor 309b to determine whether the recording medium 1 is present (S304). If the recording medium 1 is detected, the lightness sensor 309a detects the lightness level of the recording medium 1. The detected lightness level of the recording medium 1 is stored into the memory area 304a in the lightness memory 304 (S305). Then, the image forming section 309 returns the recording medium 1 to the tray 307 (S306).

The medium selecting section 306 outputs a selection signal to the tray 308. Upon receiving the selection signal from the medium selecting section 306, the tray 308 feeds the recording medium 2 to the image forming section 309 (S307) . The image forming section 309 checks the output of the medium sensor 309b to determine whether the recording medium 2 is present (S308). If the recording medium 2 is detected, the lightness sensor 309a detects the lightness level of the recording medium 2. The detected lightness level of the recording medium 2 is stored into the memory area 304b in the lightness memory 304 (S309). Then, the image forming section 309 returns the recording medium 2 to the tray 308 (S310).

The lightness comparing section 305 compares the lightness level of the original document with the content in the memory area 304a and the content in the memory area 304b, thereby determining which of the content in the memory area 304a and the content in the memory area 304b is closer to the lightness level of the original document (S311).

The comparison result is input to the medium selecting section 306. The medium selecting section outputs a selection signal to the tray 307 if the lightness level of the original document is closer to the content in the memory area 304a than to the content in the memory area 304b. The medium selecting section outputs a selection signal to the tray 308 if the lightness of the original document is closer to the content in the memory area 304b than to the content in the memory area 304a. Then, the program proceeds to step S314.

Upon receiving the selection signal, the tray 307 feeds the recording medium 1 to the image forming section 309 (S312), which in turn forms the image read from the original document on the recording medium 1 (S313). Upon receiving the selection signal, the tray 308 feeds the recording medium 2 to the image forming section 309 (S314), which in turn forms the image read from the original document on the recording medium 2 (S315).

### Fourth Embodiment

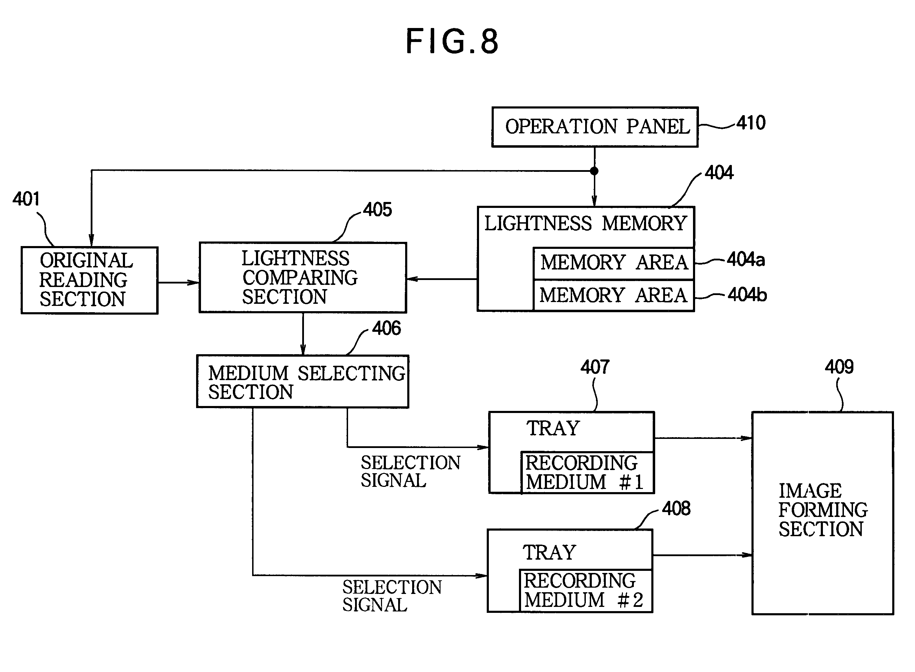

Fig. 8 illustrates the general configuration of an image forming section according to a fourth embodiment.

An original reading section 401 irradiates the original document with light and receives the light reflected back from the original document, the reflected light being an image information. The received light includes information (i.e., image) on optical reflection from an image area of the original document and information (i.e., lightness level) on optical reflection from a non-image area of the original document. A lightness memory 404 has a memory area 404a and a memory area 404b that store lightness levels received through an operation panel 410. The lightness comparing section 405 is connected to the original reading section 401 and the lightness memory 404 and compares the lightness level of the original document read by the original reading section 401 with the content in the memory area 404a and the content in the memory area 404b. The medium selecting section 406 is connected to the lightness comparing section 405 and outputs a selection signal either to the tray 407 or to the tray 408 depending on the comparison result of the lightness comparing section 405.

The tray 407 holds the recording medium 1 therein. Upon receiving the selection signal form the medium selecting section 406, the tray 407 feeds the recording medium 1 to the image forming section 409. The tray 408 holds the recording medium 2 therein. Upon receiving the selection signal form the medium selecting section 406, the tray 408 feeds the recording medium 2 to the image forming section 409. The recording medium 1 and the recording medium 2 have different lightness levels.

The image forming section 409 forms an image on the recording medium 1 fed from the tray 407 or on the recording medium 2 fed from the tray 408. When the operator inputs a command to perform a copying operation from the operation panel 410, the original reading section 401 reads the image information of the original document. Prior to inputting the lightness of a recording medium, the operation panel 410 displays a message that prompts the user to select a tray and a message that requests to input the lightness of the recording medium.

The image forming apparatus operates in two modes: a lightness reading mode in which the lightness level of a recording medium is stored and an image forming mode in which an original document is read to print a corresponding image on a recording medium. When a recording medium is replenished into a corresponding tray, the image forming apparatus enters the lightness reading mode.

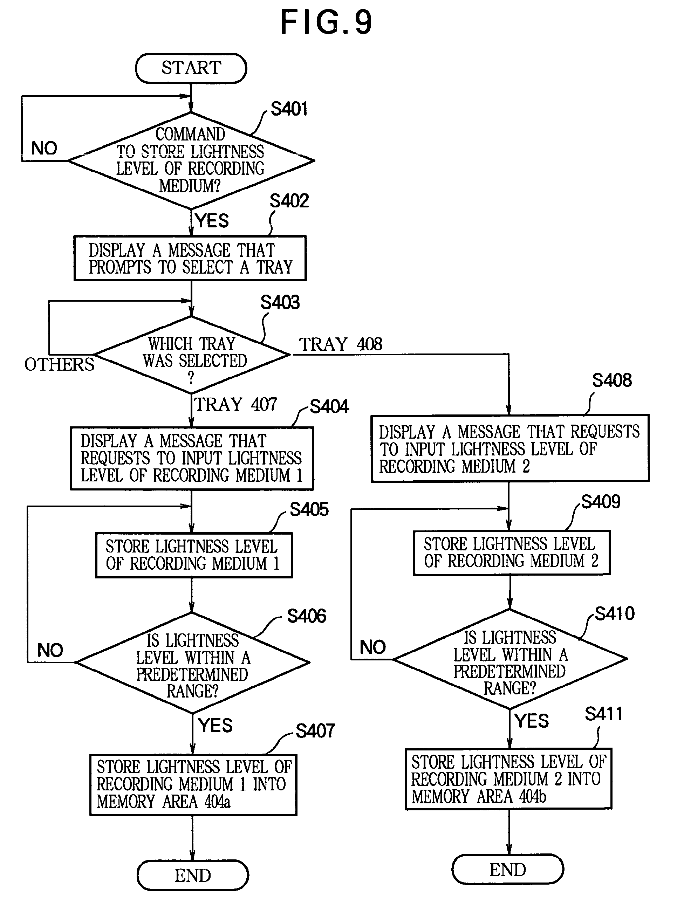

Fig. 9 is a flowchart that illustrates the lightness reading mode. The operation for storing the lightness of the recording medium held in the tray 407 will be described with reference to Fig. 9.

Through the operation panel 410, the operator commands the storage of the lightness level of the recording medium (S401). A message that prompts the user to select a tray is displayed on the operation panel 110 (S402) . When the operator operates the operation panel 410 to select the tray 407 (S403), the message that requests to read the recording medium 1 is displayed on the operation panel 410 (S404). When the operator inputs the lightness level of the recording medium 1 (S405), the operation panel 410 determines whether the input lightness level is within a predetermined range (S406). If the lightness level is out of the predetermined range, the program returns to step S405. If the lightness level is within the predetermined range, the input lightness level is stored into the memory area 404a of the lightness memory 404 (S407).

The operation for storing the lightness of the recording medium held in the tray 408 will be described with reference to Fig. 9.

When the operator commands to store the lightness of the recording medium from the operation panel 410 (S401), the operation panel 410 displays a message that prompts to select a tray (S402). When the operator operates the operation panel 410 to select the tray 408 (S403) , the operation panel 410 displays a message that prompts the operator to input the lightness level of the recording medium 2 (S408). When the operator inputs the lightness level from the operation panel 410 (S409), the operation panel 410 determines whether the input lightness level is out of a predetermined range (S410). If the lightness level is within the predetermined range, the program returns to step S409. If the lightness level is within the predetermined range, the input lightness level is stored into the memory area 404b of the lightness memory 404 (S411) . The copying operation of the image forming apparatus according to the fourth embodiment is the same as the first embodiment.

### Fifth Embodiment

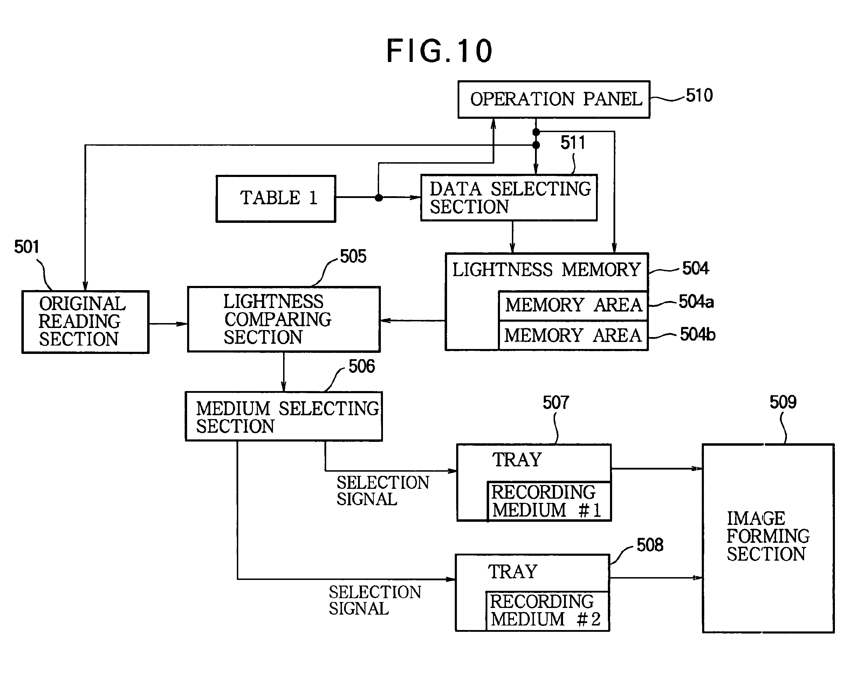

Fig. 10 illustrates an image forming apparatus according to a fifth embodiment.

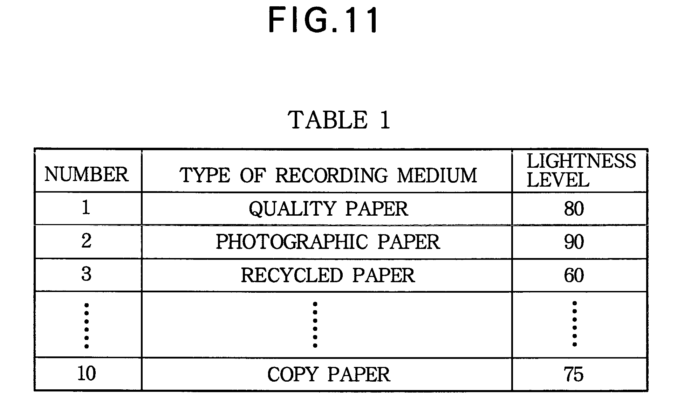

Fig. 11 illustrates TABLE 1, an example of a table that lists media and their lightness level.

An original reading section 501 irradiates the original document with light and receives the light reflected back from the original document, the reflected light being an image information. The received light includes information (i.e., image) on optical reflection from an image area of the original document and information (i.e., lightness level) on optical reflection from a non-image area of the original document. A lightness memory 504 has a memory area 504a and a memory area 504b that store the lightness levels of the recording medium 1 and recording medium 2. The lightness comparing section 505 is connected to the original reading section 501 and the lightness memory 504 and compares the lightness level of the original document read by the original reading section 501 with the content in the memory area 504a and the content in the memory area 504b. The medium selecting section 506 is connected to the lightness comparing section 505 and outputs a selection signal either to the tray 507 or to the tray 508 depending on the comparison result of the lightness comparing section 505.

The tray 507 holds the recording medium 1 therein. Upon receiving the selection signal form the medium selecting section 506, the tray 507 feeds the recording medium 1 to the image forming section 509. The tray 408 holds the recording medium 2 therein. Upon receiving the selection signal form the medium selecting section 506, the tray 508 feeds the recording medium 2 to the image forming section 509. The recording medium 1 and the recording medium 2 have different lightness levels. The image forming section 509 forms an image on the recording medium 1 fed from the tray 507 or on the recording medium 2 fed from tray 508.

When the operator inputs a command to perform a copying operation from the operation panel 510, the original reading section 501 reads the image information of the original document.

When the operator inputs a command to select a recording medium from the operation panel 510, the operation panel 510 displays a selection message that prompts the operator to select a tray and a message that requests to select a recording medium. When the operator selects a recording medium, the operation panel 510 informs the data selecting section 511 as to which recording medium has been selected.

In accordance with a command from the operation panel 510, the data selecting section 511 selects the lightness level of a desired recording medium from TABLE 1 in Fig. 11.

The operation of the image forming apparatus according to the fifth embodiment operates in two modes: a lightness reading mode in which the lightness level of a recording medium is read and stored into a memory area in the apparatus and an image forming mode (copying operation) in which an image of an original document is read to print the image of the original document on a recording medium. When a recording medium is replenished into a corresponding tray, the image forming apparatus enters the lightness reading mode.

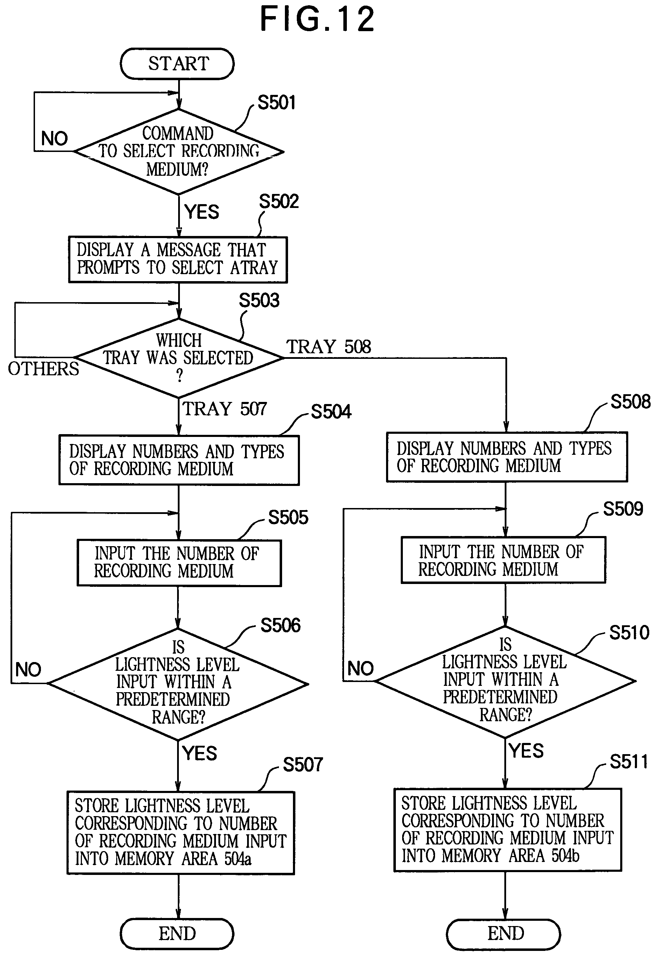

Fig. 12 is a flowchart that illustrates the lightness reading mode.

By way of example, the operation for storing the lightness of the recording medium held in the tray 507 will be described with reference to Fig. 12. When the operator inputs a command to store the lightness level of the recording medium from the operation panel 510 (S501) , the operation panel 510 displays the message that prompts the operator to select a tray (S502). The operator operates the operation panel 510 to select the tray 507 (S503) , the operation panel 510 displays the numbers of media and their names listed in TABLE 1 (S504).

The operator operates the operation panel 510 to input the number of a desired medium (S505) , the operation panel 510 determines whether the number of the desired medium is within a predetermined range (S506). If the number of the medium is out of the predetermined range, then the program returns to step S505. If the number of medium is within the predetermined range, then a lightness level corresponding to the number of the desired medium is read from the TABLE 1 and stored in the memory area 504a of the lightness memory 504 (S507).

Likewise, the operator can select the recording medium in the tray 508 as a desired medium (S508-S511). When the tray 508 is selected, the lightness level of the recording medium in the tray 508 is stored into the memory area 504b.

The copying operation of the image forming apparatus according to the fifth embodiment is the same as in the first embodiment and the description thereof is omitted.

### Sixth Embodiment

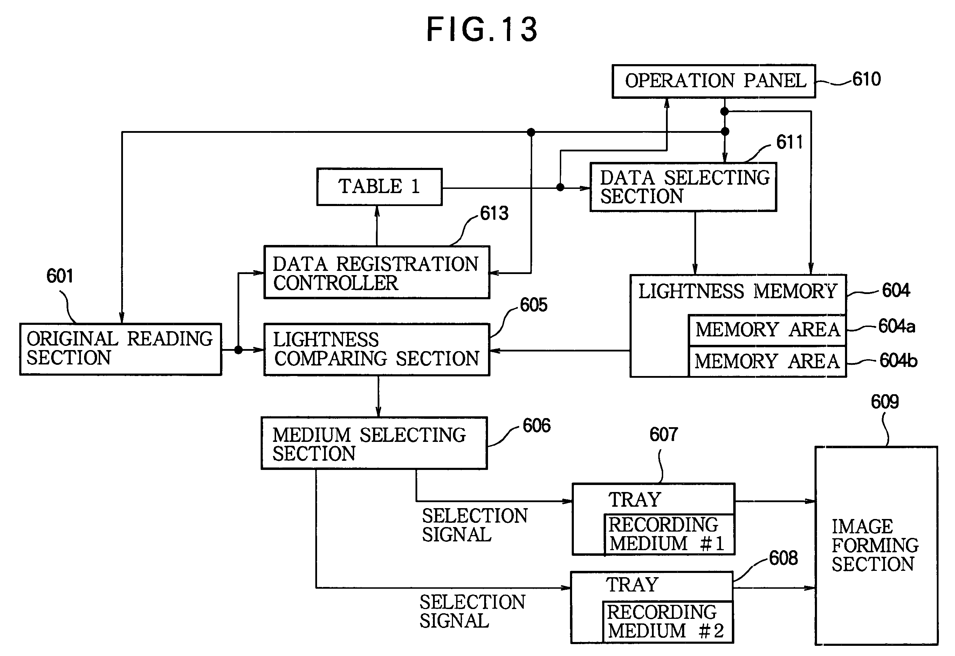

Fig. 13 illustrates the general configuration of an image forming apparatus according to a sixth embodiment.

Referring to Fig. 1, an original reading section 601 irradiates an original document with light and receive the light reflected back from the original document. The received light includes information (i. e. , image) on optical reflection from an image area of the original document and information (i.e., lightness level) on optical reflection from a non-image area of the original document. A lightness memory 604 includes a memory area 604a that holds the lightness level of the recording medium 1 and a memory area 604b that hold the lightness level of the recording medium 2. When the operator selects a desired recording medium from TABLE 1, a data selecting section 611 causes a corresponding memory area in TABLE 1 to output a lightness level of the selected recording medium to the lightness memory 604. In this manner, the information on lightness of the recording medium held in the tray is registered to the memory area in advance.

When a copy operation is performed, the lightness comparing section 605 is connected to the original reading section 601 and the lightness memory 604. The lightness comparing section 605 compares the lightness level of the original document with the content in the memory area 604a and the content in the memory area 604b. A medium selecting section 606 is connected to the lightness comparing section 605 and outputs a selection signal to the tray 607 or the tray 608 depending on the comparison result of the lightness comparing section 605.

The tray 607 holds the recording medium 1 therein. Upon receiving the selection signal from the medium selecting section 606, the tray 607 feeds the recording medium 1 to an image forming section 609.

The tray 608 holds the recording medium 2 therein. Upon receiving the selection signal from the medium selecting section 606, the tray 608 feeds the recording medium 2 to the image forming section 609. The recording medium 1 and the recording medium 2 have different lightness levels. The image forming section 609 forms an image of the original document on the recording medium 1 fed from the tray 607 or on the recording medium 2 fed from the tray 608.

When the operator inputs a command to perform a copy operation, the original reading section 601 reads the original document.

When the operator inputs a command to select a desired recording medium for the copy operation, so that the operation panel 610 outputs data that identifies a selected recording medium to the data selecting section 611.

When the operator activates the registration of the lightness level of a recording medium via the operation panel 610, the operation panel 610 displays a message that requests to select a desired number of recording medium. When the operator inputs a desired number of recording medium, the operation panel 610 displays a message that requests to read the desired recording medium. When the operator inputs a command to read the recording medium, the original reading section 601 reads the lightness level of the desired recording medium.

The data registration controller 613 registers the lightness level of the recording medium read by the original reading section 601 into TABLE 1. Then, the operation panel 610 displays a message that requests to input a type of recording medium and the operator inputs the type of recording medium. Then, the data registration controller 613 registers the type of recording medium into TABLE 1.

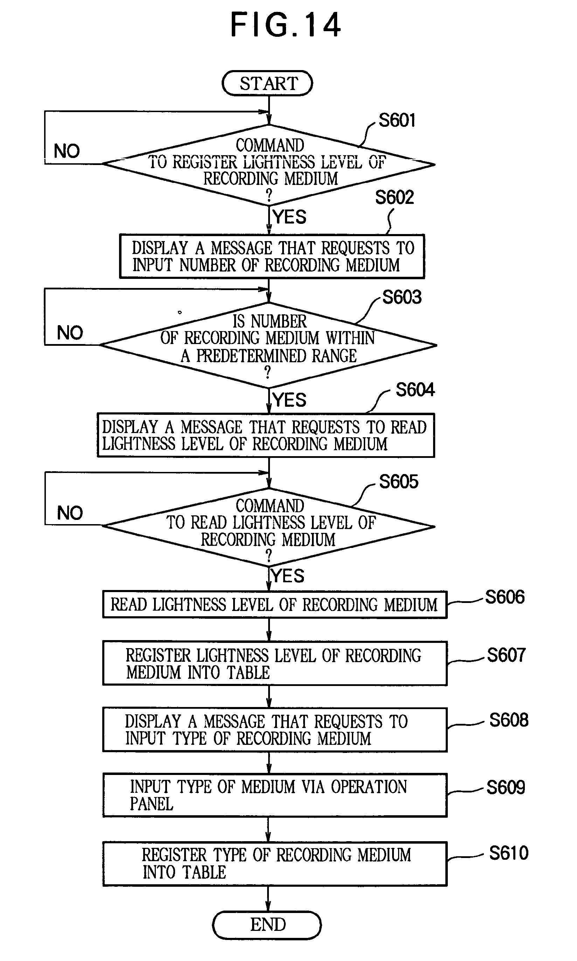

Fig. 14 is a flowchart illustrating the operation for registering the lightness of the recording medium to TABLE 1.

The operation for registering the lightness of the recording medium to TABLE 1 will be described with reference to Fig. 14. By way of example, the operation will be described with respect to a case in which the lightness level of the recording medium is assigned to medium number #10 in TABLE.

When the operator inputs a command to register the lightness level of the recording medium from the operation panel 610 (S601), the operation panel 610 displays a message that prompts the user to select a desired medium number (S602). When the operator has input "#10" from the operation panel 610 (S603) , the operation panel 610 displays a message that requests to read a recording medium (S604). When the operator places a recording medium on the glass platen and inputs a command to read the recording medium (S605) , the original reading section 601 reads the lightness level of the recording medium (S606). The data-registering controller 613 stores the lightness level of the recording medium into a memory area into which the lightness level for "#10" should be stored (S607). The operation panel 610 displays a message that indicates the completion of the registration of lightness level of the recording medium and a message that prompts the operator to input the type of the recording medium (S608). When the operator inputs the type of the recording medium from the operation panel 610 (S609), the data-registering controller 613 stores the type of the recording medium into a memory area that corresponds to the medium number "#10" in TABLE 1.

The invention being thus described, it will be obvious that'the same may be varied in many ways. Such variations are not to be regarded as a departure from the spirit and scope of the invention, and all such modifications as would be obvious to one skilled in the art intended to be included within the scope of the following claims.

According to an embodiment, an original reading section (101, 201, 301, 401, 501, 601) irradiates an original document with light and receives light reflected back from the original document. The said original-reading section obtains first information from the light reflected back from the original document, the first information being information on optical reflection from a non-image area of the original. A plurality of medium trays (107-108, 207-208, 307-308, 407-408, 507-508, 607-608) hold different types of recording media therein. An information storing section (104, 204, 304, 404, 504, 604) stores second information on optical reflection from each of the different types of recording media. A comparing section (105, 205, 305, 405, 505, 605) that compares the first information with the second information to output a comparison result. A medium selecting section (106, 206, 306, 406, 506, 606) selects a medium from the different types of recording media, the medium being selected according to the comparison result. An image forming section (109, 209, 309, 409, 509, 609) prints an image of the original document on the recording medium.

## Claims

1. An image forming apparatus comprising:
an original-reading section (101, 201, 301, 401, 501, 601) that irradiates an original document with light and receives light reflected back from the original document, wherein said original-reading section obtains first information from the light reflected back from the original document, the first information being information on optical reflection from a non-image area of the original;
a plurality of medium trays (107-108, 207-208, 307-308, 407-408, 507-508. 607-608) that hold different types of recording media therein;
an information storing section (104, 204, 304, 404, 504, 604) that stores second information on optical reflection from each of the different types of recording media;
a comparing section (105, 205, 305, 405, 505, 605) that compares the first information with the second information to output a comparison result;
a medium selecting section (106, 206, 306, 406, 506, 606) that selects a medium from the different types of recording media, the medium being selected according to the comparison result; and
an image forming section (109, 209, 309, 409, 509, 609) that forms an image on the recording medium, the image being information on optical reflection from an image area of the original document.

2. The image forming apparatus according to Claim 1, wherein the second information represents a lightness level of each of the different types of recording media.

3. The image forming apparatus according to Claim 1, wherein the second information represents a gloss level of each of the different types of recording media.

4. The image forming apparatus according to Claim 1, wherein the second information represents a color of each of the different types of recording media.

5. The image forming apparatus according to one of Claims 1 to 4, wherein said original reading section irradiates a desired recording medium with light and receives light reflected back from the desired recording medium;
wherein said original reading section (101, 201, 301, 401, 501, 601) obtains the second information on optical reflection from the desired recording medium and stores the second information into said image storing section.

6. The image forming apparatus according to one of Claims 1 to 5, wherein each of said plurality of medium trays (207, 208) includes an information obtaining section (207a, 208a) that obtains the second information, the second information being stored into said image storing section (204).

7. The image forming apparatus according to one of Claims 1 to 6, further comprising an information-obtaining section (309a) that obtains the second information, said information-obtaining section (309a) being disposed in a path in which the recording medium is transported.

8. The image forming apparatus according to one of Claims 1 to 7, further comprising an inputting section (110, 210, 310, 410, 510, 610) through which an operator inputs the second information.

9. The image forming apparatus according to one of Claims 1 to 8, further comprising:
a table (TABLE 1) that lists types of recording media and the second information corresponding to the types of recording media;
an inputting section (510) through which an operator inputs a desired type of recording medium; and
a selecting section (511) that selects from said table (TABLE
1) the second information on a recording medium of the desired type;
wherein the second information on the recording medium of the desired type selected by said selecting section (511) is stored into said information storing section (504).

10. The image forming apparatus according to Claim 9, further comprising a registering section (613) that registers to said table (TABLE 1) the types of recording media and the second information corresponding to the types of recording media;
wherein said original reading section (601) irradiates a recording medium of a desired type with light and receives light reflected back from the desired recording medium, so that said original-reading section (601) obtains the second information on optical reflection from a recording medium of the desired type;
wherein said registering section (613) registers into the table (TABLE 1) a type of the desired recording medium and the second information.
